# FASCICULE DE BREVET EUROPEEN

(11) **EP 3 218 883 B1**
(45) Date de publication et mention de la délivrance du brevet: **18.08.2021**
(21) Numéro de dépôt: 15817438.3
(22) Date de dépôt: 08.09.2015
(51) Int. Cl.: G07C 9/00, B60R 25/24

(54) **PROCÉDÉ DE DÉTECTION D'UN IDENTIFIANT POUR LE DÉMARRAGE D'UN VÉHICULE AUTOMOBILE**
VERFAHREN ZUR ERKENNUNG EINES IDENTIFIKATORS ZUM STARTEN EINES KRAFTFAHRZEUGES
METHOD FOR DETECTING AN IDENTIFIER FOR STARTING A MOTOR VEHICLE

(30) Priorité: 08.09.2014 FR 1402018
(43) Date de publication de la demande: 20.09.2017
(73) Titulaire: Valeo Comfort and Driving Assistance, 94046 Créteil Cedex (FR)
(72) Inventeur: MENARD, Eric, F-94046 Créteil Cedex (FR); MASSON, Fabienne, F-94046 Créteil Cedex (FR); DELAUNAY, Francis, F-94046 Créteil Cedex (FR)
(74) Mandataire: Delplanque, Arnaud
(86) Numéro de dépôt international: PCT/FR2015/052380
(87) Numéro de publication internationale: WO 2016/038294

(56) Documents cités:
- EP-A1- 0 841 448
- WO-A1-2013/094661
- WO-A1-2014/091654
- WO-A2-2005/088561
- DE-A1-102013 227 204
- FR-A1- 2 910 751
- US-A1- 2003 216 124
- US-A1- 2005 258 936
- US-A1- 2014 240 091
- None

## Description

### DOMAINE TECHNIQUE DE L'INVENTION

La présente invention concerne un procédé de détection d'un identifiant pour le démarrage d'un véhicule automobile.

Elle trouve une application particulière mais non limitative dans le domaine des véhicules automobiles.

### ARRIÈRE-PLAN TECHNOLOGIQUE DE L'INVENTION

Dans le domaine des véhicules automobiles, il existe des procédés de détection d'un identifiant pour le démarrage d'un véhicule automobile qui permettent de déterminer si l'identifiant est à l'intérieur du véhicule automobile avec une marge n'excédant pas vingt centimètres autour du véhicule automobile selon une réglementation Thatcham bien connue de l'homme du métier. On s'assure ainsi que personne ne pourra démarrer le véhicule automobile alors que l'utilisateur du véhicule et son identifiant se trouve à l'extérieur dudit véhicule. Pour réaliser cette fonction, le véhicule automobile comporte une première antenne qui émet un signal à basse fréquence (125kHz) et l'identifiant comporte une deuxième antenne qui reçoit ce signal basse fréquence. Ce signal basse fréquence permet de délimiter avec précision la zone intérieure et la zone extérieure au véhicule automobile de sorte à déterminer si l'identifiant se situe bien dans l'habitacle du véhicule automobile.

Un inconvénient de cet état de la technique est que si on veut utiliser un procédé qui soit compatible avec des identifiants tels que des téléphones mobiles utilisant la technologie Bluetooth Low energy™, le véhicule automobile doit comporter une première antenne qui émette un signal Bluetooth Low energy™ pour communiquer avec lesdits téléphones mobiles. Avec une telle technologie, il est difficile de délimiter avec précision différentes zones en raison notamment de signaux parasites dus à des réflexions des signaux émis sur les parties métalliques du véhicule automobile, réflexions qui existent pour des signaux autres que basse fréquence.

Le document FR 2 910 751 A1 divulgue un procédé de détection d'un objet d'identification dans un véhicule selon l'état de la technique mentionné ci-dessus.

Le document US 2005/0258936 A1 divulgue un procédé pour calibrer, départ usine, le gain des antennes intérieures et extérieures d'un véhicule.

### DESCRIPTION GENERALE DE L'INVENTION

A cette fin l'invention propose un procédé de détection d'un identifiant pour le démarrage d'un véhicule selon les revendications 1 à 9.

Selon des modes de réalisation, le procédé de détection peut comporter en outre une ou plusieurs caractéristiques supplémentaires parmi les suivantes.

Selon un mode de réalisation, la distance seuil est égale à vingt centimètres plus ou moins dix centimètres.

Selon un mode de réalisation, le procédé comprend en outre :
- le positionnement dudit identifiant à une position de référence ;
- le calibrage du canal de communication entre la première antenne et la deuxième antenne dudit identifiant avec la première antenne lors de la première utilisation dudit identifiant avec le véhicule automobile et/ou sur demande.

Selon un mode de réalisation, ladite première antenne est disposée à une distance prédéfinie de la position de référence du véhicule automobile et le calibrage comprend :
- l'émission par la première antenne vers la deuxième antenne d'un premier signal de calibration à la puissance nominale ;
- la mesure de la puissance dudit signal de réception correspondant reçu par ladite deuxième antenne et l'envoi de ladite puissance mesurée vers ladite première antenne ;
- la comparaison de ladite puissance mesurée avec une puissance théorique correspondant à ladite distance prédéfinie au moyen d'une courbe de régression de puissance en fonction de la distance ;
- la détermination s'il existe un décalage entre ladite puissance mesurée et ladite puissance théorique ;
- s'il existe un décalage, la modification de la puissance nominale du premier signal émis Bluetooth Low Energy™ en fonction dudit décalage ou la modification de la puissance seuil en fonction dudit décalage.

Selon un mode de réalisation, lors de la première utilisation de l'identifiant avec le véhicule automobile, le procédé comporte en outre l'affichage par l'identifiant sur un écran d'un message invitant l'utilisateur dudit identifiant à positionner ledit identifiant sur la position de référence et à déclencher ledit calibrage.

Selon un mode de réalisation, ladite première antenne est disposée au niveau de la position de référence.

Selon un mode de réalisation, le procédé comporte en outre l'autorisation du démarrage du véhicule automobile uniquement si l'identifiant est disposé au niveau de la position de référence du véhicule automobile.

Selon un mode de réalisation, l'identifiant est un téléphone mobile.

Selon un mode de réalisation, le procédé comprend en outre :
- le calibrage du canal de communication entre la première antenne et la deuxième antenne avec la deuxième antenne.

Selon un mode de réalisation, le calibrage avec la deuxième antenne comprend :
- l'émission par la deuxième antenne vers la première antenne d'un premier signal de calibration à la puissance nominale ;
- la mesure de la puissance dudit signal de réception correspondant reçu par ladite première antenne ;
- la comparaison de ladite puissance mesurée avec une puissance théorique correspondant à ladite distance prédéfinie au moyen d'une courbe de régression de puissance en fonction de la distance ;
- la détermination s'il existe un décalage entre ladite puissance mesurée et ladite puissance théorique ;
- s'il existe un décalage, la modification de la puissance nominale du premier signal émis Bluetooth Low Energy™ en fonction dudit décalage ou la modification de la puissance seuil en fonction dudit décalage.

Selon un mode de réalisation, une pluralité de signaux de calibration est envoyée et une pluralité de mesures de puissance est effectuée, et la puissance mesurée comparée avec ladite puissance théorique est égale à la moyenne des puissances mesurées appartenant à un intervalle dépendant de l'écart-type de la pluralité de mesure de puissance.

### BREVE DESCRIPTION DES FIGURES

L'invention et ses différentes applications seront mieux comprises à la lecture de la description qui suit et à l'examen des figures qui l'accompagnent.
- la figure 1 représente un schéma d'un système de détection d'un identifiant pour le démarrage d'un véhicule automobile permettant de mettre en œuvre un procédé de détection d'un identifiant pour le démarrage d'un véhicule automobile ;
- la figure 2 représente une courbe de décroissance de puissance applicable à un identifiant du système de détection de la figure 1 ;
- la figure 3 représente un organigramme d'un procédé de détection d'un identifiant pour le démarrage d'un véhicule automobile selon un mode de réalisation de l'invention ;
- la figure 4 illustre un organigramme d'un calibrage d'un canal de communication entre une antenne de l'identifiant et une antenne du véhicule automobile, ledit calibrage étant effectué par le procédé de détection de la figure 3.

### DESCRIPTION DE MODES DE REALISATION DE L'INVENTION

Les éléments identiques, par structure ou par fonction, apparaissant sur différentes figures conservent, sauf précision contraire, les mêmes références.

L'invention concerne un procédé de détection PR d'un identifiant Id pour le démarrage d'un véhicule automobile V, ledit véhicule automobile comprenant une première antenne A1 et ledit identifiant Id comprenant une deuxième antenne A2.

Le procédé de détection PR est mis en œuvre par un système de détection d'un identifiant Id pour le démarrage du véhicule automobile V.

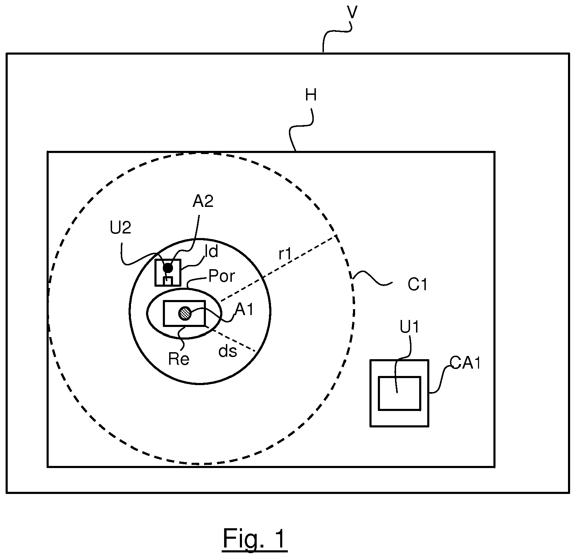

La figure 1 illustre ledit système de détection SYS.

Il comprend :
- une première antenne A1 intégré dans l'habitacle H du véhicule automobile V ;
- un identifiant Id comprenant une deuxième antenne A2 ;
- un calculateur CA1 du véhicule automobile V, ledit calculateur comprenant une unité de traitement U1 ; et
- une unité de traitement U2de l'identifiant Id.

On notera qu'une unité de traitement comprend un ou plusieurs processeurs. La première antenne A1 peut être locale au calculateur CA1 ou déportée. Ainsi, le calculateur CA1 peut comprendre ladite première antenne A1. Sur la figure 1, la première antenne A1 est déportée.

L'identifiant Id du véhicule automobile permet d'accéder au véhicule automobile et également de démarrer le véhicule automobile V. Dans des exemples non limitatifs, l'identifiant Id est une clef électronique, un badge, un téléphone mobile tel qu'un « smartphone ».

Dans un mode de réalisation, l'identifiant Id utilise la technologie Bluetooth Low Energy™ pour communiquer avec le véhicule automobile V, que ce soit pour l'accès au véhicule, c'est-à-dire pour ouvrir un ouvrant du véhicule (portière ou coffre), ou pour le démarrage du véhicule.

La procédure d'accès à un véhicule automobile via un identifiant Id étant bien connue de l'homme du métier, elle n'est pas décrite ici.

Ainsi, les deux antennes A1, A2 sont adaptées pour communiquer via la technologie Bluetooth Low Energy™.

Lors du procédé de détection PR, on veut déterminer si l'identifiant Id est à l'intérieur de l'habitacle H du véhicule automobile, mais plus particulièrement s'il est situé à une distance inférieure à une distance seuil ds de la première antenne A1.

Dans un mode de réalisation, la distance seuil ds est égale à vingt centimètres plus ou moins dix centimètres. Ainsi, on détermine si l'identifiant Id est à vingt centimètres de la première antenne A1 dans un exemple non limitatif.

Tel qu'illustré sur la figure 1, le véhicule automobile V comprend l'habitacle H. Un cercle C1 inscrit dans ledit habitacle H centré sur la première antenne A1 est défini. Comme on peut le voir, la distance seuil ds est telle qu'elle est inférieure au rayon r1 de ce cercle C1. Ledit cercle C1 définit la zone limite intérieure de l'habitacle H centré sur la première antenne A1. Au-delà, on peut se trouver à l'extérieur du véhicule. Le cercle correspond ainsi à l'émission de la première antenne A1 à une certaine puissance. Si la première antenne A1 émet à une puissance inférieure à la puissance correspondante de ce cercle, les identifiants se trouvant à l'extérieur du véhicule ne seront pas autorisés à démarrer le véhicule. Aussi, on définit une distance seuil ds inférieure au rayon r1 de ce cercle C1 pour éviter le démarrage par des identifiants se trouvant à l'extérieur du cercle C1.

Lorsque l'identifiant Id est disposé à une distance de la première antenne A1 suffisante, l'identifiant Id est adapté pour :
- recevoir un premier signal Sg1 Bluetooth Low Energy™ émis par ladite première antenne A1 ;
- mesurer de la puissance P1' dudit signal reçu correspondant Sg1' par la deuxième antenne A2.

Dans un premier mode de réalisation, l'identifiant Id (via son unité de traitement U2) est en outre adapté pour comparer ladite puissance mesurée P1' avec une puissance seuil Ps, ladite puissance seuil Ps correspondant à une distance seuil ds de ladite première antenne A1 qui est inférieure au rayon r1 du cercle C1 inscrit dans l'habitacle H du véhicule automobile V, ledit cercle C1 étant centré sur ladite première antenne A1.

Dans un deuxième mode de réalisation non compris dans les revendications, le calculateur CA1 du véhicule automobile V est adapté pour comparer ladite puissance mesurée P1' avec une puissance seuil Ps, ladite puissance seuil Ps correspondant à une distance seuil ds de ladite première antenne A1 qui est inférieure au rayon r1 du cercle C1 inscrit dans l'habitacle H du véhicule automobile V, ledit cercle C1 étant centré sur ladite première antenne A1.

De son côté, ladite première antenne A1 du véhicule automobile V est adaptée pour :
- émettre un premier signal Sg1 Bluetooth Low EnergyTM vers ledit identifiant Id à une puissance nominale P1 ;
- recevoir via le protocole de communication Bluetooth Low Energy™ le résultat de la comparaison entre les puissances P1' et Ps ; et
- transmettre ledit résultat au calculateur CA1 du véhicule automobile V.

Le calculateur CA1 du véhicule automobile V est en outre adapté pour autoriser le démarrage du véhicule automobile V si la puissance mesurée P1' est supérieure ou égale à ladite puissance seuil Ps.

On notera que la première antenne A1 émet à puissance constante P1, dite nominale. La puissance nominale P1 est la puissance de fonctionnement de l'antenne A1.

Comme on va le voir ci-après, la puissance du signal émis par l'antenne A1 peut être modifiée selon le résultat de la calibration décrite ci-après.

La calibration permet de calibrer le canal de communication entre la première antenne A1 et la deuxième antenne A2. Le calibrage est fait soit par l'identifiant Id, soit par le véhicule V.

On notera que le calibrage est également appelé calibration.

### • Calibrage par le véhicule automobile V.

Dans un premier mode de réalisation, le calibrage est effectué par le véhicule automobile V.

On notera que les deuxièmes antennes A2 des identifiants, notamment lorsque ceux-ci sont des téléphones mobiles, comportent des performances variables selon les différents types de téléphones mobiles utilisés (à savoir lorsqu'ils sont fabriqués par différents fabricants) mais également à l'intérieur même d'une même gamme de téléphones fabriqués par le même fabricant. Par performances différentes, on entend que pour un même signal envoyé par la première antenne A1 (de même puissance donc), les différentes deuxièmes antennes A2 ne vont pas recevoir la même puissance de signal.

Il faut donc calibrer la deuxième antenne A2 d'un identifiant Id avec la première antenne A1 en particulier lors de sa première utilisation avec ledit véhicule V.

Ainsi, dans un mode de réalisation, la première antenne A1 est en outre adaptée pour calibrer la deuxième antenne A2 notamment lors de sa première utilisation avec le véhicule automobile V.

On notera que pour réaliser un démarrage, le véhicule automobile identifie l'identifiant Id pour vérifier que c'est un identifiant autorisé pour démarrer le véhicule automobile. A cet effet, le véhicule automobile V envoie une trame d'interrogation à l'identifiant Id. Dans un mode de réalisation non limitatif, le véhicule automobile envoie la valeur de la puissance seuil Ps dans ladite trame d'interrogation de l'identifiant Id pour qu'il l'utilise avant de répondre à une demande de démarrage. La puissance seuil Ps est ainsi sauvegardée en mémoire dans l'identifiant Id

Si l'identifiant Id reçoit un signal du véhicule automobile V avec un niveau de puissance inférieur à la puissance seuil Ps, il n'y a pas de démarrage.

On notera que pour vérifier si l'identifiant Id est utilisé pour la première fois avec le véhicule automobile V, il suffit de regarder si une valeur de la puissance seuil Ps est stockée dans la mémoire dudit identifiant Id. Si c'est le cas, ledit identifiant Id a déjà été utilisé avec ledit véhicule automobile V.

Ladite calibration se fait lorsque l'identifiant Id est positionné à une position de référence Por.

Ainsi, l'identifiant Id est en outre adapté pour être positionné à ladite position de référence Por.

La position de référence Por comprend par exemple un réceptacle Re adapté pour recevoir l'identifiant Id.

Afin de déclencher le calibrage, lorsque l'utilisateur appuie sur le bouton démarrage du véhicule V, lors de la première utilisation de l'identifiant Id avec le véhicule V, un calculateur associé au bouton de démarrage va envoyer à l'identifiant Id du véhicule V une commande à la première antenne A1 pour émettre un premier signal de calibration Sgc.

De plus, dans un mode de réalisation, lors de la première utilisation de l'identifiant Id avec le véhicule V, afin que l'identifiant soit positionné à la position de référence Por, l'identifiant Id est en outre adapté pour afficher sur un écran Sc un message Msg (de type fenêtre « Pop-Up » dans un exemple non limitatif) invitant l'utilisateur dudit identifiant Id à positionner ledit identifiant au niveau de la position de référence Por et à déclencher le calibrage (en appuyant sur un bouton « Ok » dans un exemple non limitatif).

On notera que la première antenne A1 est disposée à une distance prédéfinie d2 de la position de référence Por du véhicule automobile V. Dans un exemple non limitatif, la distance prédéfinie d2 est égale à dix centimètres. Dans un autre exemple, la première antenne A1 est disposée au niveau de la position de référence Por, à savoir la distance prédéfinie d2 est sensiblement égale à zéro.

Dans un autre mode de réalisation, la première antenne A1 est en outre adaptée pour calibrer la deuxième antenne A2 sur demande, même après la première utilisation de l'identifiant Id. Par exemple, l'identifiant Id peut comporter un menu permettant de lancer la fonction de calibrage associée au démarrage du véhicule automobile V. De la même manière que décrit précédemment, un calculateur associé au bouton de démarrage va envoyer à l'identifiant Id du véhicule V une commande à la première antenne A1 pour émettre un premier signal de calibration Sgc, et un message Msg peut inviter l'utilisateur dudit identifiant Id à positionner ledit identifiant Id au niveau de la position de référence Por.

Ainsi, pour le calibrage, dans une première variante de réalisation :
- la première antenne A1 est adaptée pour :
   - émettre vers la deuxième antenne A2 un premier signal de calibration Sgc à la puissance nominale P1 ;
- la deuxième antenne A2 est adaptée pour :
   - mesurer la puissance P2' dudit signal de réception Sgr correspondant reçu;
   - envoyer ladite puissance mesurée P2' vers ladite première antenne A1 ;
- l'unité de traitement U1 du calculateur CA1 est en outre adaptée pour :
   - comparer ladite puissance mesurée P2' avec une puissance théorique Pt correspondant à ladite distance prédéfinie d2 au moyen d'une courbe Cn de régression de puissance en fonction de la distance ;
   - déterminer s'il existe un décalage Off entre ladite puissance mesurée P2' et ladite puissance théorique Pt ;
   - s'il existe un décalage Off, modifier la puissance nominale P1 du premier signal émis Sg1 Bluetooth Low Energy™ en fonction dudit décalage Off ou modifier la puissance seuil Ps en fonction dudit décalage Off.

Dans une deuxième variante de réalisation non comprise dans les revendications,
- la première antenne A1 est adaptée pour :
   - émettre vers la deuxième antenne A2 un premier signal de calibration Sgc à la puissance nominale P1 ;
- la deuxième antenne A2 est adaptée pour :
   - mesurer la puissance P2' dudit signal de réception Sgr correspondant reçu;
- l'unité de traitement U2 de l'identifiant Id est adaptée pour :
   - comparer ladite puissance mesurée P2' avec une puissance théorique Pt correspondant à ladite distance prédéfinie d2 au moyen d'une courbe Cn de régression de puissance en fonction de la distance ;
   - déterminer s'il existe un décalage Off entre ladite puissance mesurée P2' et ladite puissance théorique Pt ;
   - s'il existe un décalage Off, envoyer ledit décalage Off à la première antenne A1.
   - modifier la puissance nominale P1 du premier signal émis Sg1 Bluetooth Low Energy™ en fonction dudit décalage Off ou modifier la puissance seuil Ps en fonction dudit décalage Off.

Dans cette deuxième variante, l'unité de traitement U2 de l'identifiant Id effectue la comparaison. La puissance mesurée P2' n'a pas besoin d'être envoyée à la première antenne A1, mais seulement le décalage Off.

Dans un mode de réalisation, la première antenne A1 est adaptée pour émettre vers la deuxième antenne A2 une pluralité de premiers signaux de calibration Sgc à la puissance nominale P1. Cela permet d'affiner le calibrage.

Dans mode de réalisation, la première antenne A1 est adaptée pour émettre vers la deuxième antenne A2 entre dix et cinquante premiers signaux de calibration Sgc à la puissance nominale P1. Dans une variante de réalisation, la première antenne A1 est adaptée pour émettre vers la deuxième antenne A2 trente premiers signaux de calibration Sgc à la puissance nominale P1.

Dans un mode de réalisation, la moyenne M2 de la pluralité de mesures de la puissance P2' ainsi que l'écart-type E2 sont calculés. Puis, l'intervalle entre l'écart-type E2 et la moyenne M2 est calculé. On calcule ainsi I2 = [M2-E2 ; M2+E2].

La moyenne M3 des mesures de la puissance P2' qui appartiennent à cet intervalle I2 est calculée puis comparée à ladite puissance théorique Pt, comme décrit précédemment. On ne prend ainsi pas en compte les mesures qui sont trop dispersées.

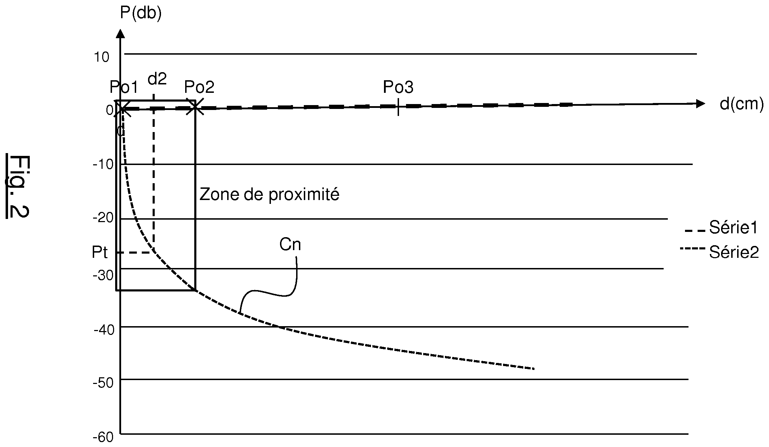

La courbe Cn de décroissance de puissance par rapport à la distance (appelée également courbe de régression ou courbe RSSI « Received Signal Strength Indication ») est illustrée schématiquement sur la figure 2. Cette courbe est valable pour tous les identifiants Id qui sont des téléphones mobiles. En abscisse, on trouve la distance (en centimètres), en ordonnée, on trouve la puissance (en décibels par exemple). On peut voir sur la courbe Cn qu'il existe un premier intervalle (entre les points po1 et po2) dans lequel la courbe présente une forte pente et un deuxième intervalle (entre les points po2 et po3) dans lequel la courbe présente une pente faible.

La distance prédéfinie d2 est déterminée de sorte à ce qu'elle se trouve dans le premier intervalle po1-po2. De cette manière les écarts mesurés de puissance seront plus visibles que dans le deuxième intervalle po2-po3 ce qui facilitera la calibration.

Ainsi, dans l'exemple de d2 égale à dix centimètres, on aura une certaine valeur théorique de puissance Pt.

S'il existe un écart Off entre cette valeur théorique Pt et la valeur mesurée P2', on prend en compte ce décalage Off.

Dans un premier mode de réalisation, on modifie la puissance nominale P1 en fonction de ce décalage Off. Par exemple si la puissance P2' mesurée en position de référence Por (10cm par rapport à la première antenne A1 dans l'exemple pris) est inférieure à la puissance théorique Pt, cela se traduit par le fait que l'identifiant Id est considéré comme étant à une distance plus élevée que 10cm alors qu'il est réellement à 10cm. Il faut donc ajuster la puissance nominale émise par la première antenne A1 selon la courbe de régression pour rattraper cet écart, et dans l'exemple pris augmenter la puissance nominale P1 pour que l'identifiant Id reçoive une puissance attendue à la position de référence.

Dans un deuxième mode de réalisation, au lieu de modifier la puissance nominale P1 d'émission des signaux Bluetooth Low Energy™ par la première antenne A1, on modifie la puissance seuil Ps en fonction dudit décalage Off. La modification se fait dans l'identifiant Id qui compare la puissance mesurée P1' avec la puissance seuil Ps. Dans l'exemple pris, on diminue la puissance seuil Ps. On met ainsi la puissance seuil Ps plus faible.

### • Calibrage par l'identifiant Id.

Dans un deuxième mode de réalisation, le calibrage est effectué par l'identifiant Id.

Ce mode de réalisation permet de s'adapter à l'environnement véhicule et aux dispersions des identifiants Id. En effet, des signaux parasites peuvent être présents du fait de l'environnement véhicule et le signal émis par un identifiant Id peut avoir une puissance nominale différente selon les types d'identifiants ou également à l'intérieur même d'une même gamme d'identifiants fabriqués par le même fabricant.

Ainsi, le procédé de détection PR peut comporter le calibrage de la première antenne A1 avec la deuxième antenne A2 dudit identifiant Id.

Ainsi, pour le calibrage, dans une première variante de réalisation :
- la deuxième antenne A2 est adaptée pour :
   - émettre vers la première antenne A1 un premier signal de calibration Sgc à la puissance nominale P1 ;
- la première antenne A1 est adaptée pour :
   - mesurer la puissance P2' dudit signal de réception Sgr correspondant reçu et envoyer ladite puissance mesurée P2' vers ladite deuxième antenne A2 ;
- l'unité de traitement U2 de l'identifiant Id est adaptée pour :
   - comparer ladite puissance mesurée P2' avec une puissance théorique Pt correspondant à ladite distance prédéfinie d2 au moyen d'une courbe Cn de régression de puissance en fonction de la distance ;
   - déterminer s'il existe un décalage Off entre ladite puissance mesurée P2' et ladite puissance théorique Pt ;
   - s'il existe un décalage Off, modifier la puissance nominale P1 du premier signal émis Sg1 Bluetooth Low Energy™ en fonction dudit décalage Off ou modifier la puissance seuil Ps en fonction dudit décalage Off.

Ainsi, pour le calibrage, dans une deuxième variante de réalisation :
- la deuxième antenne A2 est adaptée pour :
   - émettre vers la première antenne A1 un premier signal de calibration Sgc à la puissance nominale P1 ;
- la première antenne A1 est adaptée pour :
   - mesurer la puissance P2' dudit signal de réception Sgr correspondant reçu ;
- l'unité de traitement U1 du calculateur CA1 est adaptée pour :
   - comparer ladite puissance mesurée P2' avec une puissance théorique Pt correspondant à ladite distance prédéfinie d2 au moyen d'une courbe Cn de régression de puissance en fonction de la distance ;
   - déterminer s'il existe un décalage Off entre ladite puissance mesurée P2' et ladite puissance théorique Pt ;
   - s'il existe un décalage Off, modifier la puissance nominale P1 du premier signal émis Sg1 Bluetooth Low Energy™ en fonction dudit décalage Off ou modifier la puissance seuil Ps en fonction dudit décalage Off.

Dans cette deuxième variante, le calculateur CA1 effectue la comparaison. La puissance mesurée P2' n'a pas besoin d'être envoyée à la deuxième antenne A2.

De la même manière que dans le premier mode de réalisation, dans un mode de réalisation, la deuxième antenne A2 est adaptée pour émettre vers la première antenne A1 une pluralité de premiers signaux de calibration Sgc à la puissance nominale P1. Cela permet d'affiner le calibrage.

Dans mode de réalisation, la deuxième antenne A2 est adaptée pour émettre vers la première antenne A1 entre dix et cinquante premiers signaux de calibration Sgc à la puissance nominale P1. Dans une variante de réalisation, la deuxième antenne A2 est adaptée pour émettre vers la première antenne A1 trente premiers signaux de calibration Sgc à la puissance nominale P1.

On notera que les deux calibrages (par le véhicule automobile ou par l'identifiant Id) peuvent être effectuées en combinaison.

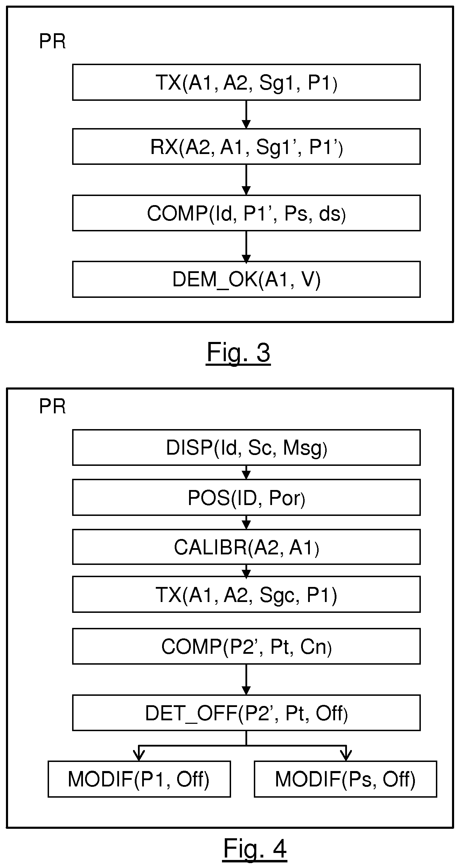

Ainsi, le système de détection décrit SYS permet de mettre en œuvre le procédé de détection PR (illustré à la figure 3) d'un identifiant Id pour le démarrage d'un véhicule automobile V, ledit véhicule automobile comprenant une première antenne A1 et ledit identifiant Id comprenant une deuxième antenne A2, ledit procédé P comportant :
- l'émission par ladite première antenne A1 d'un premier signal Sg1 Bluetooth Low Energy™ vers ledit identifiant Id à une puissance nominale P1 (fonction illustrée TX(A1, A2, Sg1, P1)) ;
- la mesure de la puissance P1' dudit signal reçu correspondant Sg1' par la deuxième antenne A2 dudit identifiant Id (fonction illustrée RX(A2, A1, Sg1', P1')) ;
- la comparaison de ladite puissance mesurée P1' avec une puissance seuil Ps (fonction illustrée COMP(Id, P1', Ps, ds), ladite puissance seuil Ps correspondant à une distance seuil ds de ladite première antenne A1 qui est inférieure au rayon r1 du cercle C1 inscrit dans l'habitacle H du véhicule automobile V, ledit cercle C1 étant centré sur ladite première antenne A1 ;
- l'autorisation du démarrage du véhicule automobile V si la puissance mesurée P1' est supérieure ou égale à ladite puissance seuil Ps (fonction illustrée DEM_OK(A1, V)).

Dans un mode de réalisation, la distance seuil ds est égale à vingt centimètres plus ou moins dix centimètres.

Dans des modes de réalisation, le procédé PR comprend en outre les étapes supplémentaires.

Dans un mode de réalisation, le procédé comprend en outre :
- le positionnement dudit identifiant Id à une position de référence Por (fonction POS(Id, Por)) ;
- le calibrage du canal de communication avec la première antenne A1 lors de la première utilisation dudit identifiant Id avec le véhicule automobile V (fonction CALIBR(A2, A1)).

Dans un autre mode de réalisation, le calibrage s'effectue de manière volontaire même après la première utilisation dudit identifiant. Le calibrage peut donc s'effectuer sur demande à la première utilisation dudit identifiant, ou sur demande après la première utilisation dudit identifiant.

Dans un mode de réalisation, ladite première antenne A1 est disposée à une distance prédéfinie d2 de la position de référence Por du véhicule automobile Por et le calibrage comprend :
- l'émission par la première antenne A1 vers la deuxième antenne A2 d'un premier signal de calibration Sgc à la puissance nominale P1 (fonction TX(A1, A2, Sgc, P1)) ;
- la mesure de la puissance P2' dudit signal de réception Sgr correspondant reçu par ladite deuxième antenne A2 (fonction MES(A2, P2')) et l'envoi de ladite puissance mesurée P2' vers ladite première antenne A1 (fonction TX(A2, A1, P2'));
- la comparaison de ladite puissance mesurée P2' avec une puissance théorique Pt correspondant à ladite distance prédéfinie d2 au moyen d'une courbe Cn de régression de puissance en fonction de la distance (fonction COMP(P2', Pt, Cn)) ;
- la détermination s'il existe un décalage Off entre ladite puissance mesurée P2' et ladite puissance théorique Pt (fonction DET_OFF(P2', Pt, Off));
- s'il existe un décalage Off, modifier la puissance nominale P1 du premier signal émis Sg1 Bluetooth Low EnergyTM en fonction dudit décalage Off (fonction MODIF(P1, Off)) ou modifier la puissance seuil Ps en fonction dudit décalage Off (fonction MODIF(Ps, Off)).

Dans un mode de réalisation, lors de la première utilisation de l'identifiant Id1 avec le véhicule automobile V, le procédé comporte en outre l'affichage par l'identifiant Id sur un écran Sc d'un message Msg invitant l'utilisateur dudit identifiant Id à positionner ledit identifiant sur la position de référence Por et à déclencher ledit calibrage (fonction DISP(Id, Sc, Msg)).

Dans un mode de réalisation, le procédé PR comprend en outre :
- le calibrage du canal de communication avec la deuxième antenne A2 dudit identifiant Id.

Le calibrage s'effectue lors de la première utilisation dudit identifiant Id avec le véhicule automobile V ou de manière volontaire.

Ainsi, dans une première variante de réalisation, le calibrage comprend :
- l'émission par la deuxième antenne A2 vers la première antenne A1 d'un premier signal de calibration Sgc à la puissance nominale P1 ;
- la mesure de la puissance P2' dudit signal de réception Sgr correspondant reçu par ladite première antenne A1 et l'envoi de ladite puissance mesurée P2' vers ladite deuxième antenne A2 ;
- la comparaison de ladite puissance mesurée P2' avec une puissance théorique Pt correspondant à ladite distance prédéfinie d2 au moyen courbe Cn de régression de puissance en fonction de la distance ;
- la détermination s'il existe un décalage Off entre ladite puissance mesurée P2' et ladite puissance théorique Pt ;
- s'il existe un décalage Off, la modification de la puissance nominale P1 du premier signal émis Sg1 Bluetooth Low Energy™ en fonction dudit décalage Off ou la modification de la puissance seuil Ps en fonction dudit décalage Off.

On notera que les deux calibrages (par la première antenne A1 et par la deuxième antenne A2) peuvent être effectués en combinaison.

Dans un mode de réalisation, le procédé PR comprend l'envoi d'une pluralité de premiers signaux de calibration Sgc et la mesure d'une puissance P2' de la pluralité de signaux de réception Sgr correspondants. Dans un mode de réalisation non limitatif, le procédé PR comprend
- le calcul de la moyenne M2 de la pluralité de mesures de puissance P2' ;
- le calcul de l'écart-type E2 de la pluralité de mesures de puissance P2' ;
- le calcul de l'intervalle entre l'écart-type E2 et la moyenne M2. On calcule ainsi I2 = [M2-E2 ; M2+E2] ;
- Le calcul de la moyenne M3 des mesures de la puissance P2' qui appartiennent à cet intervalle I2 et la comparaison de cette moyenne M3 avec ladite puissance théorique Pt, comme décrit précédemment.

Les mêmes calculs s'appliquent pour une pluralité de deuxièmes signaux de calibration Sgc et de mesures de puissance P2' de la pluralité de signaux de réception Sgr correspondants.

Dans un mode de réalisation du procédé, ladite première antenne A1 est disposée au niveau de la position de référence Por, à savoir au niveau du réceptacle Re.

Ainsi, dans un mode de réalisation du procédé, le procédé comporte en outre l'autorisation du démarrage du véhicule automobile V uniquement si l'identifiant Id est disposé au niveau de la position de référence Por du véhicule automobile V, à savoir sur le réceptacle Re.

Ainsi, l'invention décrite présente notamment les avantages suivants :
- elle est simple à mettre en œuvre ;
- elle permet de déterminer un identifiant à l'intérieur de l'habitacle d'un véhicule automobile, et plus particulièrement à proximité de l'antenne du véhicule automobile ;
- elle permet d'utiliser des identifiants qui sont des téléphones mobiles ;
- elle permet d'utiliser la technologie Bluetooth Low Energy™ non seulement pour l'accès au véhicule, mais également pour le démarrage. On utilise ainsi la même antenne coté véhicule et côté identifiant. Il n'est pas nécessaire d'utiliser une antenne différente pour l'accès et une antenne supplémentaire pour le démarrage ;
- elle permet de réduire les coûts du fait de l'utilisation d'une unique antenne pour effectuer les deux fonctions différentes accès et démarrage ; et
- elle permet un calibrage côté identifiant Id ou côté véhicule automobile.

## Revendications

1. Procédé de détection (PR) d'un identifiant (Id) pour le démarrage d'un véhicule automobile (V), ledit véhicule automobile comprenant une première antenne (A1) et ledit identifiant (Id) comprenant une deuxième antenne (A2), selon lequel ledit procédé comporte :
- l'émission par ladite première antenne (A1) d'un premier signal (Sg1) Bluetooth Low Energy™ vers ledit identifiant (Id) à une puissance nominale (P1) ;
- la mesure de la puissance (P1') dudit signal reçu correspondant (Sg1') par la deuxième antenne (A2) dudit identifiant (Id);
- la comparaison de ladite puissance mesurée (P1') avec une puissance seuil (Ps) par l'identifiant (Id), ladite puissance seuil (Ps) correspondant à une distance seuil (ds) de ladite première antenne (A1) qui est inférieure au rayon (r1) d'un cercle (C1) inscrit dans l'habitacle (H) du véhicule automobile (V), ledit cercle (C1) étant centré sur ladite première antenne (A1) ;
- la réception par ladite première antenne (A1) via le protocole de communication Bluetooth Low Energy™ du résultat de la comparaison entre les puissances P1' et Ps ;l'autorisation du démarrage du véhicule automobile (V) si la puissance mesurée (P1') est supérieure ou égale à ladite puissance seuil (Ps) ;
le procédé comprenant en outre:
- le positionnement dudit identifiant (Id) à une position de référence (Por) du véhicule automobile (V), ladite première antenne (A1) étant disposée à une distance prédéfinie (d2) de la position de référence (Por) ;
- le calibrage du canal de communication entre la première antenne (A1) et la deuxième antenne (A2) dudit identifiant (Id) avec la première antenne (A1) lors de la première utilisation dudit identifiant (Id) avec le véhicule automobile (V) et/ou sur demande, le calibrage comprenant :
∘ l'émission par la première antenne (A1) vers la deuxième antenne (A2) d'un premier signal de calibration (Sgc) à la puissance nominale (P1) ;
∘ la mesure de la puissance (P2') dudit signal de réception (Sgr) correspondant reçu par ladite deuxième antenne (A2) et l'envoi de ladite puissance mesurée (P2') vers ladite première antenne (A1) ;
∘ la comparaison de ladite puissance mesurée (P2') avec une puissance théorique (Pt) correspondant à ladite distance prédéfinie (d2) au moyen d'une courbe (Cn) de régression de puissance en fonction de la distance ;
∘ la détermination s'il existe un décalage (Off) entre ladite puissance mesurée (P2') et ladite puissance théorique (Pt) ;
∘ s'il existe un décalage (Off), la modification de la puissance nominale (P1) du premier signal émis (Sg1) Bluetooth Low Energy™ en fonction dudit décalage (Off) ou la modification de la puissance seuil (Ps) en fonction dudit décalage (Off).

2. Procédé de détection (PR) selon la revendication 1, selon lequel la distance seuil (ds) est égale à vingt centimètres plus ou moins dix centimètres.

3. Procédé de détection (PR) selon la revendication 1, selon lequel lors de la première utilisation de l'identifiant (Id1) avec le véhicule automobile (V), le procédé comporte en outre l'affichage par l'identifiant (Id) sur un écran (Sc) d'un message invitant l'utilisateur dudit identifiant (Id) à positionner ledit identifiant sur la position de référence (Por) et à déclencher ledit calibrage.

4. Procédé de détection (PR) selon l'une des revendications 1 ou 3, selon lequel ladite première antenne (A1) est disposée au niveau de la position de référence (Por).

5. Procédé de détection (PR) selon l'une quelconque des revendications 1 ou 3 à 6, selon lequel le procédé comporte en outre l'autorisation du démarrage du véhicule automobile (V) uniquement si l'identifiant (Id) est disposé au niveau de la position de référence (Por) du véhicule automobile (V).

6. Procédé de détection (PR) selon l'une quelconque des revendications 1 à 5, selon lequel l'identifiant (Id) est un téléphone mobile.

7. Procédé de détection (PR) selon l'une quelconque des revendications 1 à 6, selon lequel le procédé comprend en outre :
- le calibrage du canal de communication entre la première antenne (A1) et la deuxième antenne (A2) avec la deuxième antenne (A2).

8. Procédé de détection (PR) selon la revendication 8, selon lequel le calibrage avec la deuxième antenne (A2) comprend :
- l'émission par la deuxième antenne (A2) vers la première antenne (A1) d'un premier signal de calibration (Sgc) à la puissance nominale (P1) ;
- la mesure de la puissance (P2') dudit signal de réception (Sgr) correspondant reçu par ladite première antenne (A1) ;
- la comparaison de ladite puissance mesurée (P2') avec une puissance théorique (Pt) correspondant à ladite distance prédéfinie (d2) au moyen d'une courbe (Cn) de régression de puissance en fonction de la distance ;
- la détermination s'il existe un décalage (Off) entre ladite puissance mesurée (P2') et ladite puissance théorique (Pt) ;
- s'il existe un décalage (Off), la modification de la puissance nominale (P1) du premier signal émis (Sg1) Bluetooth Low Energy™ en fonction dudit décalage (Off) ou la modification de la puissance seuil (Ps) en fonction dudit décalage (Off).

9. Procédé de détection (PR) selon l'une quelconque des revendications précédentes, selon lequel une pluralité de premiers signaux de calibration (Sgc) est envoyée et une pluralité de mesures de puissance (P2') est effectuée, et selon lequel la puissance mesurée comparée (P2') à ladite puissance théorique (Pt) est égale à la moyenne (M3) des puissances mesurées (P2') appartenant à un intervalle (I2) dépendant de l'écart-type (E2) de la pluralité de mesure de puissance (P2').

## Patentansprüche

1. Verfahren zur Erkennung (PR) eines Identifikators (Id) zum Starten eines Kraftfahrzeugs (V), wobei das Kraftfahrzeug eine erste Antenne (A1) umfasst und der Identifikator (Id) eine zweite Antenne (A2) umfasst, wobei das Verfahren Folgendes umfasst:
- Senden eines ersten Bluetooth-Low-Energy™-Signals (Sg1) von der ersten Antenne (A1) an den Identifikator (Id) mit einer Nennleistung (P1);
- Messen der Leistung (P1') des entsprechenden Signals (Sg1'), das von der zweiten Antenne (A2) des Identifikators (Id) empfangen wird;
- Vergleichen der gemessenen Leistung (P1') mit einer Schwellenleistung (Ps) durch den Identifikator (Id), wobei die Schwellenleistung (Ps) einer Schwellenentfernung (ds) von der ersten Antenne (A1) entspricht, die kleiner ist als der Radius (r1) eines Kreises (C1), der in den Innenraum (H) des Kraftfahrzeugs (V) eingeschrieben ist, wobei der Kreis (C1) auf der ersten Antenne (A1) zentriert ist;
- Empfangen des Ergebnisses des Vergleichs zwischen den Leistungen P1' und Ps von der ersten Antenne (A1) über das Bluetooth-Low-Energy™-Kommunikationsprotokoll; Autorisieren des Startens des Kraftfahrzeugs (V), wenn die gemessene Leistung (P1') größer oder gleich der Schwellenleistung (Ps) ist;
wobei das Verfahren ferner Folgendes umfasst:
- Positionieren des Identifikators (Id) an einer Referenzposition (Por) des Kraftfahrzeugs (V), wobei die erste Antenne (A1) in einer vordefinierten Entfernung (d2) von der Referenzposition (Por) angeordnet ist;
- Kalibrieren des Kommunikationskanals zwischen der ersten Antenne (A1) und der zweiten Antenne (A2) des Identifikators (Id) mit der ersten Antenne (A1) bei der ersten Verwendung des Identifikators (Id) mit dem Kraftfahrzeug (V) und/oder auf Anfrage, wobei das Kalibrieren Folgendes umfasst:
∘ Senden eines ersten Kalibriersignals (Sgc) mit der Nennleistung (P1) von der ersten Antenne (A1) an die zweite Antenne (A2);
∘ Messen der Leistung (P2') des entsprechenden Empfangssignals (Sgr), das von der zweiten Antenne (A2) empfangen wird, und Senden der gemessenen Leistung (P2') an die erste Antenne (A1);
∘ Vergleichen der gemessenen Leistung (P2') mit einer theoretischen Leistung (Pt), die der vordefinierten Entfernung (d2) entspricht, mittels einer Regressionskurve (Cn) der Leistung in Abhängigkeit von der Entfernung;
∘ Bestimmen, ob ein Offset (Off) zwischen der gemessenen Leistung (P2') und der theoretischen Leistung (Pt) besteht;
∘ wenn ein Offset (Off) besteht, Verändern der Nennleistung (P1) des ersten gesendeten Bluetooth-Low-Energy™-Signals (Sgl) in Abhängigkeit von dem Offset (Off) oder Verändern der Schwellenleistung (Ps) in Abhängigkeit von dem Offset (Off).

2. Verfahren zur Erkennung (PR) nach Anspruch 1, wobei die Schwellenentfernung (ds) zwanzig Zentimeter plus oder minus zehn Zentimeter beträgt.

3. Verfahren zur Erkennung (PR) nach Anspruch 1, wobei bei der ersten Verwendung des Identifikators (Id1) mit dem Kraftfahrzeug (V) das Verfahren ferner die Anzeige, durch den Identifikator (Id), einer Nachricht auf einem Bildschirm (Sc) umfasst, die den Benutzer des Identifikators (Id) dazu auffordert, den Identifikator an der Referenzposition (Por) zu positionieren und die Kalibrierung auszulösen.

4. Verfahren zur Erkennung (PR) nach einem der Ansprüche 1 oder 3, wobei die erste Antenne (A1) an der Referenzposition (Por) angeordnet ist.

5. Verfahren zur Erkennung (PR) nach einem der Ansprüche 1 oder 3 bis 6, wobei das Verfahren ferner das Autorisieren des Startens des Kraftfahrzeugs (V) nur, wenn der Identifikator (Id) an der Referenzposition (Por) des Kraftfahrzeugs (V) angeordnet ist, umfasst.

6. Verfahren zur Erkennung (PR) nach einem der Ansprüche 1 bis 5, wobei der Identifikator (Id) ein Mobiltelefon ist.

7. Verfahren zur Erkennung (PR) nach einem der Ansprüche 1 bis 6, wobei das Verfahren ferner Folgendes umfasst:
- Kalibrieren des Kommunikationskanals zwischen der ersten Antenne (A1) und der zweiten Antenne (A2) mit der zweiten Antenne (A2).

8. Verfahren zur Erkennung (PR) nach Anspruch 8, wobei die Kalibrierung mit der zweiten Antenne (A2) Folgendes umfasst:
- Senden eines ersten Kalibriersignals (Sgc) mit der Nennleistung (P1) von der zweiten Antenne (A2) an die erste Antenne (A1);
- Messen der Leistung (P2') des entsprechenden Empfangssignals (Sgr), das von der ersten Antenne (A1) empfangen wird;
- Vergleichen der gemessenen Leistung (P2') mit einer theoretischen Leistung (Pt), die der vordefinierten Entfernung (d2) entspricht, mittels einer Regressionskurve (Cn) der Leistung in Abhängigkeit von der Entfernung;
- Bestimmen, ob ein Offset (Off) zwischen der gemessenen Leistung (P2') und der theoretischen Leistung (Pt) besteht;
- wenn ein Offset (Off) besteht, Verändern der Nennleistung (P1) des ersten gesendeten Bluetooth-Low-Energy™-Signals (Sg1) in Abhängigkeit von dem Offset (Off) oder Verändern der Schwellenleistung (Ps) in Abhängigkeit von dem Offset (Off).

9. Verfahren zur Erkennung (PR) nach einem der vorhergehenden Ansprüche, wobei mehrere erste Kalibriersignale (Sgc) gesendet werden und mehrere Leistungsmessungen (P2') ausgeführt werden, und wobei die gemessene Leistung (P2'), die mit der theoretischen Leistung (Pt) verglichen wird, gleich dem Durchschnitt (M3) der gemessenen Leistungen (P2') ist, die einem Intervall (I2) angehören, das abhängig von der Standardabweichung (E2) der mehreren Leistungsmessungen (P2') ist.

## Claims

1. Method (PR) for detecting an identifier (Id) for starting a motor vehicle (V), said motor vehicle comprising a first antenna (A1) and said identifier (Id) comprising a second antenna (A2), according to which said method comprises:
- transmitting, by means of said first antenna (A1), a first Bluetooth Low Energy™ signal (Sg1) toward said identifier (Id) at a nominal power (P1) ;
- measuring the power (P1') of said corresponding signal (Sg1') received by the second antenna (A2) of said identifier (Id);
- the identifier (Id) comparing said measured power (P1') with a threshold power (Ps), said threshold power (Ps) corresponding to a threshold distance (ds) from said first antenna (A1) which is smaller than the radius (r1) of a circle (C1) inscribed in the passenger compartment (H) of the motor vehicle (V), said circle (C1) being centred on said first antenna (A1);
- said first antenna (A1) receiving, via the Bluetooth Low Energy™ communication protocol, the result of the comparison between the powers P1' and Ps;
- enabling the starting of the motor vehicle (V) if the measured power (P1') is greater than or equal to said threshold power (Ps);
the method further comprising:
- positioning said identifier (Id) at a reference position (Por) of the motor vehicle (V);
- said first antenna (A1) being placed at a predefined distance (d2) from the reference position (Por);
- adjusting the communication channel between the first antenna (A1) and the second antenna (A2) of said identifier (Id) with the first antenna (A1) on the first use of said identifier (Id) with the motor vehicle (V) and/or on request, the adjustment comprising:
∘ transmitting, by means of the first antenna (A1), a first calibration signal (Sgc) at the nominal power (P1) toward the second antenna (A2);
∘ measuring the power (P2') of said corresponding reception signal (Sgr) received by said second antenna (A2), and sending said measured power (P2') toward said first antenna (A1);
∘ comparing said measured power (P2') with a theoretical power (Pt) corresponding to said predefined distance (d2), using a regression curve (Cn) of power as a function of distance;
∘ determining whether there is an offset (Off) between said measured power (P2') and said theoretical power (Pt);
∘ if there is an offset (Off), modifying the nominal power (P1) of the first transmitted Bluetooth Low Energy™ signal (Sgl) as a function of said offset (Off), or modifying the threshold power (Ps) as a function of said offset (Off).

2. Detection method (PR) according to Claim 1, according to which the threshold distance (ds) is equal to twenty centimetres, plus or minus ten centimetres.

3. Detection method (PR) according to Claim 1, according to which, on the first use of the identifier (Id1) with the motor vehicle (V), the method further comprises the display by the identifier (Id) on a screen (Sc) of a message inviting the user of said identifier (Id) to position said identifier in the reference position (Por) and to launch said adjustment.

4. Detection method (PR) according to either of Claims 1 and 3, according to which said first antenna (A1) is placed at the reference position (Por).

5. Detection method (PR) according to any one of Claims 1 or 3 to 6, according to which the method further comprises enabling the starting of the motor vehicle (V) solely if the identifier (Id) is placed at the reference position (Por) of the motor vehicle (V).

6. Detection method (PR) according to any one of Claims 1 to 5, according to which the identifier (Id) is a mobile telephone.

7. Detection method (PR) according to any one of Claims 1 to 6, according to which the method further comprises:
- adjusting the communication channel between the first antenna (A1) and the second antenna (A2) with the second antenna (A2).

8. Detection method (PR) according to Claim 8, according to which the adjustment with the second antenna (A2) comprises:
- transmitting, by means of the second antenna (A2), a first calibration signal (Sgc) at the nominal power (P1) toward the first antenna (A1);
- measuring the power (P2') of said corresponding reception signal (Sgr) received by said first antenna (A1);
- comparing said measured power (P2') with a theoretical power (Pt) corresponding to said predefined distance (d2), using a regression curve (Cn) of power as a function of distance;
- determining whether there is an offset (Off) between said measured power (P2') and said theoretical power (Pt);
- if there is an offset (Off), modifying the nominal power (P1) of the first transmitted Bluetooth Low Energy™ signal (Sg1) as a function of said offset (Off), or modifying the threshold power (Ps) as a function of said offset (Off).

9. Detection method (PR) according to any one of the preceding claims, according to which a plurality of first calibration signals (Sgc) are sent and a plurality of power measurements (P2') are made, and according to which the measured power (P2') compared with said theoretical power (Pt) is equal to the mean (M3) of the measured powers (P2') lying within a range (I2) which depends on the standard deviation (E2) of the plurality of power measurements (P2').
